# EUROPÄISCHE PATENTSCHRIFT

(11) **EP 2 649 689 B1**
(45) Veröffentlichungstag und Bekanntmachung des Hinweises auf die Patenterteilung: **04.03.2015**
(21) Anmeldenummer: 11776067.8
(22) Anmeldetag: 31.08.2011
(51) Int. Cl.: H02G 3/06, H02G 3/08

(54) **VORRICHTUNG ZUR FIXIERUNG EINES KABELS AN EINEM KABELABGANGSSTUTZEN**
APPARATUS FOR FIXING A CABLE TO A CABLE OUTLET STUB
DISPOSITIF POUR FIXER UN CÂBLE SUR UN RACCORD DE DÉPART DE CÂBLE

(30) Priorität: 07.12.2010 DE 102010061067
(43) Veröffentlichungstag der Anmeldung: 16.10.2013
(73) Patentinhaber: Harting Electric GmbH & Co. KG, 32339 Espelkamp (DE)
(72) Erfinder: SPILKER, Nicole, 32312 Lübbecke (DE); SCHLEGEL, Bernard, 32369 Rahden (DE)
(86) Internationale Anmeldenummer: PCT/DE2011/075205
(87) Internationale Veröffentlichungsnummer: WO 2012/079571

(56) Entgegenhaltungen:
- EP-A1- 0 446 466
- DE-A1-102008 011 978
- DE-U1- 9 402 993
- US-A- 4 739 126

## Beschreibung

Die Erfindung betrifft eine Vorrichtung zur Fixierung eines Kabels an einen Kabelabgangsstutzen, bestehend aus einer Spannhülse, einem Federelement und einem Verriegelungsring.

Derartige Vorrichtungen zur Fixierung eines Kabels an einen Kabelabgangsstutzen werden benötigt, um Kabel an Kabelabgängen von Steckverbindergehäusen, Schaltschränken oder Ähnlichen verdreh- und zugsicher zu halten.

Die EP 0 627 588 B1 zeigt eine Kabelverschraubung zur Sicherung eines Kabels an einen Kabelabgangsstutzen. Der Stutzen ist mit einzelnen, flexiblen Klemmzungen versehen, welche, beim Aufschrauben einer Überwurfmutter, gegen eine über den Kabelmantel geschobene Dichtung geführt werden und damit die Dichtung und gleichzeitig das Kabel einklemmen.

Beim Zusammenpressen der Klemmzungen kann es vorkommen, dass der über die Dichtung auf das Kabel ausgeübte Pressdruck nicht die erforderliche Höhe zur Dreh- und Zugsicherung des Kabels erreicht.

Die DE 3 128 541 C1 zeigt eine Kabelverschraubung mit einer Sicherung gegen unbeabsichtigtes Lösen. Allerdings erfordert die Kabelverschraubung hier spezielles Werkzeug.
Die DE 198 49 227 C1 zeigt eine Kabelhalterung zur Fixierung eines Kabels an einen Kabelabgangsstutzen. Die Kabelhalterung umfasst einen äußeren Druckring, der wiederum gleichmäßig am Umfang verteilte, axial abstehende Rastarme umfasst. Die Rastarme greifen in eine umlaufende Nut eines inneren, metallischen Druckrings ein und halten diesen damit verliersicher fest. Der innere Druckring ist Teil der Kabelhalterung. Um das Kabel am Kabelabgangsstutzen zu halten, wird eine Klemmfeder um den Kabelmantel gezurrt, während die Kabelhalterung auf den Kabelabgangsstutzen aufgeschraubt wird.

Die DE 26 356 13 C3 zeigt eine Kabelfixierungsvorrichtung, die aus einer Spannhülse gebildet ist, die wiederum so genannte Spannbacken umfasst. Die Spannbacken bestehen aus elastischem Material und umfassen radial nach innen stehende Zähne, die der Kabelzugentlastung dienen. Die Spannhülse wird über eine Schraubverbindung auf den Kabelabgangsstutzen befestigt.

Schraubverbindungen zur Kabelfixierung haben aber den Nachteil, dass die Schraubpartner miteinander verkanten können und dadurch die Dichtigkeit der Schraubverbindung gegenüber Medien wie Staub und Wasser gefährdet ist.

Die Aufgabe der Erfindung besteht darin, eine Kabelfixierung vorzuschlagen, die die oben geschilderten Mängel beseitigt und einfach montierbar ist.

Die Aufgabe wird durch die kennzeichnenden Merkmale des Anspruchs 1 gelöst.

Vorteilhafte Ausgestaltungen der Erfindung sind in den Unteransprüchen angegeben.

Ein Kabelzugentlastungs- und Dichtungssystem ist in der Regel in einem Kabelfixierungselement, beispielsweise einer Kabelverschraubung, integriert. Die Kabelfixierung besteht im wesentlichen aus den Bauteilen Spannhülse, Federelement und Verriegelungsring, die in Wirkzusammenhang mit dem Kabelzugentlastungs- und Dichtungssystem ein Kabel auf einem Kabelabgangsstutzen eines Steckverbindergehäuses fixieren. Das Kabel kann beispielsweise mehradrig sein.

Das Kabelzugentlastungs- und Dichtungssystem besteht aus einem Zugentlastungselement und einem Dichtungselement. Das Zugentlastungselement ist im wesentlichen wie eine Spiralfeder geformt und hat demnach eine helixförmige Struktur. Das Wort "helixförmig" kann im allgemeinen Sprachgebrauch auch mit dem Wort "wendelförmig" gleichgesetzt werden. Einseitig ist das Zugentlastungselement mit dem Dichtungselement verbunden. Das Zugentlastungselement bildet mit dem Dichtungselement eine funktionale Einheit, die auch als Wirkverbindung bezeichnet wird.

Das Dichtungselement ist scheibenförmig ausgebildet und mittig mit einer Öffnung versehen, dessen Durchmesser kleiner ist als der Durchmesser des anzuschließenden Kabels.

Optional kann das Dichtungselement auch mit einer so genannten Durchsteckmembran anstelle der Öffnung versehen sein.

Die Seite des Dichtungselements, die zur Kabelabgangsrichtung gerichtet ist (die Außenseite), ist randseitig mit konzentrisch umlaufenden Lammellen, so genannten Presslamellen versehen. Die gegenüberliegende Seite (die Innenseite) des Dichtungselements weist ebenfalls Lamellen, so genannte Dichtlamellen, auf, die die Öffnung für das anzuschließende Kabel umschließen. Die Dichtlamellen verlaufen konzentrisch um die Öffnung des Dichtungselements, die für das Kabel vorgesehen ist. Das Kabel wird bei der Montage durch das Zugentlastungselement und durch die Öffnungen des Dichtungselements und der Spannhülse geschoben.

Oft wird das Dichtungselement aus Material mit Elastomereigenschaften (wie beispielsweise EPDM, NBR, PU, etc.) gefertigt. In diesem Fall sind die Lamellen beim Herstellungsverfahren bereits eingeformt. Die innenseitigen Dichtlamellen sorgen für eine verbesserte Dichtfunktion zwischen Dichtungselement und Kabelmantel. Die außenseitigen Presslamellen des Dichtungselements erhöhen die Dichtwirkung zwischen der Spannhülse und dem Kabelabgangsstutzen.

Der Verriegelungsring umschließt gleichzeitig die Spannhülse und den Kabelabgangsstutzen. Die Spannhülse enthält Rastöffnungen, in denen ein ringförmiges Federelement eingerastet ist. Das Federelement umfasst dazu geeignete Rastlaschen, die in die Rastöffnungen eingreifen. Das Federelement umfasst ferner Verriegelungshaken, die in axialer Richtung vom Federelement abstehen.

Der Verriegelungsring ist drehbar um den Kabelabgangsstutzen und der Spannhülse gelagert. Er umfasst in radialer Richtung nach innen gerichtete Verriegelungskonturen. Die Verriegelungskonturen sind am unteren Rand der Spannhülse innenseitig umlaufend und in einem äquidistanten Abstand voneinander angeordnet. Bei Drehung des Verriegelungsrings, also bei einer Relativbewegung des Verriegelungsrings zur Spannhülse, werden die Verriegelungskonturen des Verriegelungsrings gegen die Verriegelungshaken des Federelements geführt. Dadurch werden die Verriegelungshaken radial nach innen gebogen und in eine umlaufende Nut des Kabelabgangsstutzens geführt. Hierdurch wird eine Verriegelung der Spannhülse mit dem Kabelabgangsstutzen erreicht.

Die Drehrichtung des Verriegelungsrings, bei der die Rasthaken des Federelements in die umlaufende Nut des Kabelabgangsstutzens geführt werden, wird Verriegelungsrichtung genannt. Bei einer gegensinnigen Drehrichtung, der so genannten Öffnungsdrehrichtung, werden die Rasthaken wieder aus den Wirkbereich der Verriegelungskontur des Verriegelungsrings geführt. Dabei gleiten die Rasthaken seitlich an der Verriegelungskontur ab und schnellen radial nach außen zurück, sobald sie aus dem Wirkbereich der Verriegelungskonturen gelangen.

Wenn über die oben erwähnten Verriegelungskonturen keine Kraft auf die Rasthaken des Federelements ausgeübt wird, befinden sich diese in ihrer so genannten Nullstellung. Auch in ihrer Nullstellung greifen die Rasthaken noch leicht in die umlaufende Nut ein, so dass die Spannhülse nicht vom Kabelabgangsstutzen herabfallen kann.

Wie bereits oben erwähnt, wird das Kabel vor der Montage der Kabelfixierungsvorrichtung in die Öffnung der trichterförmigen Spannhülse eingebracht. Gleichzeitig wird es vom wendelförmigen Zugentlastungselement und dem daran angebundenen Dichtungselement umschlossen. Die Spannhülse wird im unteren Bereich von dem Verriegelungsring umgeben. Anschließend wird die Spannhülse auf den Kabelabgangsstutzen gesetzt, so dass der Verriegelungsring gleichermaßen den oberen Bereich des Kabelabgangsstutzens umschließt.

Wie bereits oben erwähnt, besitzt das Federelement axial abstehende Rasthaken. Der Kabelabgangsstutzen enthält eine umlaufende Nut, in welche die Rasthaken eingeführt werden, während der Verriegelungsring in Verriegelungsrichtung gedreht wird. Ist die Endposition der Verriegelungsrichtung erreicht, greifen die Rasthaken des Federelements in die umlaufende Nut des Kabelabgangsstutzens vollständig ein. Dadurch wird die das Kabel umschließende Spannhülse auf dem Kabelabgangsstutzen gehalten bzw. fixiert.

In einer besonders vorteilhaften Ausführungsform greifen die Rasthaken des Federelements bereits in ihrer Nullstellung in die umlaufende Nut des Kabelabgangsstutzens ein. Um die Spannhülse auf den Kabelabgangsstutzen zu halten, kann diese einfach auf den Kabelabgangsstutzen aufgeschoben werden. Die Rasthaken des Federelements weichen zunächst leicht radial zurück und schnappen dann in die umlaufende Nut ein. Dabei handelt es sich aber nicht um eine vollständige Fixierung der Spannhülse auf dem Kabelabgangsstutzen. Dazu ist eine weitere Drehbewegung des Verriegelungsrings in die Verriegelungsrichtung notwendig. Auch erst dann wird eine Dichtung, die zwischen der Spannhülse und dem Kabelabgangsstutzen liegt, gepresst. Dazu weiter unten mehr.

Die Spannhülse umfasst längliche Stege, die innerhalb einer Ebene liegend radial nach außen gerichtet sind. Diese Stege werden beim Zusammenführen von Spannhülse und Verriegelungsring in axiale Aussparungen des Verriegelungsrings eingeführt. Diese Aussparungen werden von innen liegenden Stegen des Verriegelungsrings eingeschlossen. Die Stege der Spannhülse und des Verriegelungsrings verlaufen entgegengesetzt schräg, betrachtet in der Ebene der Steckrichtung. Bei der Relativbewegung des Verriegelungsrings zur Spannhülse, also bei der Drehbewegung des Verriegelungsrings, werden beide Stege gegeneinander gepresst, so dass die Teile (Spannhülse und Verriegelungsring) miteinander verklemmt sind. Diese Verklemmung wird auch als Bajonett-Verschluss bezeichnet.

Bei verklemmten Stegen ist auch die Endposition der Verriegelungsrichtung erreicht und die Rasthaken des Federelements greifen in die umlaufende Nut des Kabelabgangsstutzens ein.

Die Spannhülse umschließt zum Teil die Mantelfläche des Kabelabgangsstutzens. Im Inneren der Spannhülse ist ein umlaufender Rand angeformt. Zwischen diesem Rand und der Berandung des Kabelabgangsstutzen ist das Dichtungselement angeordnet.

Durch die Verklemmung des Verriegelungsrings mit der Spannhülse und der gleichzeitigen Fixierung der Spannhülse auf dem Kabelabgangsstutzen, wird das Dichtungselement zwischen dem oben genannten umlaufenden Rand der Spannhülse und der Berandung des Kabelabgangsstutzens eingeklemmt.

Der innere umlaufende Rand der Spannhülse übt eine Kraft auf die Presslamellen des Dichtungselements aus. Durch die randseitig umlaufenden Presslamellen verkleinert sich die Berührfläche zwischen dem inneren, umlaufenden Rand der Spannhülse und dem Dichtungselement. So wird bei gleicher Presskraft ein höherer Druck auf die Dichtung ausgeübt.

Bei vollständig voneinander getrennten, also entklemmten Stegen, ist die Endposition der Öffnungsrichtung erreicht und die Rasthaken des Federelements sind vollständig aus der umlaufenden Nut des Kabelabgangsstutzens geführt. Jetzt ist die Spannhülse vom Kabelabgangsstutzen entfernbar.

Abgehend vom Kabelabgangsstutzen wird das Kabel vom Zugentlastungselement umschlossen. Das Zugentlastungselement umfasst an einem ersten Ende Konturen, welche in Ausnehmungen des Kabelabgangsstutzen einführbar sind. Dadurch wird das Zugentlastungselement an diesem Ende drehfest um seine axiale Achse fixiert.

An einem zweiten Ende umfasst das Zugentlastungselement radial nach außen weisende Rasthaken. Diese Rasthaken greifen in zugehörige Rastkonturen des Kabelabgangsstutzens ein, so dass das zweite Ende des Zugentlastungselements in einer Richtung drehfest fixierbar ist. Bei Drehung in die andere Richtung gleiten die flexiblen Rasthaken an den Rastkonturen ab.

Weiterhin weist das Zugentlastungselement an dem zweiten Ende axial nach außen weisende Mitnehmerhaken auf. Die Spannhülse umfasst innenseitig dazu passende Mitnehmerkonturen. Bei einer Relativbewegung der Spannhülse zum Zugentlastungselement in eine erste Richtung, der so genannten Spannrichtung, wird das zweite Ende des Zugentlastungselements relativ zum ersten Ende, welches im Kabelabgangsstutzen fixiert ist, bewegt bzw. verdreht.

Die Mitnehmerkonturen sind im Inneren der Spannhülse, entlang der Kabelöffnung, kreisförmig aneinandergereiht. In radialer Richtung sind die benachbarten Mitnehmerkonturen zueinander versetzt. Man könnte auch sagen, dass die Mitnehmerkonturen entlang Ihrer Erstreckungsrichtung radial nach außen laufen, gegen den Uhrzeigersinn betrachtet.

Dadurch kann die Helixstruktur des Zugentlastungselements um den Kabelmantel festgezurrt werden. Dies wird später noch detaillierter beschrieben.

Die Mitnehmerkonturen der Spannhülse sind demnach derart geformt, dass, bei einer Relativbewegung der Spannhülse zum Zugentlastungselement in eine zweite Richtung, also entgegen der Spannrichtung, die Mitnehmerhaken des Zugentlastungselements an den Mitnehmerkonturen der Spannhülse entlang gleiten, ohne dass eine ausreichende Kraft auf die Mitnehmerhaken ausgeübt wird, die eine relative Verdrehung der Enden des Zugentlastungselement verursachen würde. Die Mitnehmerhaken bestehen aus einem elastisch verformbaren Material und weichen gegebenenfalls leicht in radialer Richtung aus.

Wie bereits oben beschrieben, ist das Zugentlastungselement zwischen seinen beiden Enden wendel- bzw. helixförmig ausgebildet. Diese Wendelstruktur umschließt den Kabelmantel des anzuschließenden Kabels. Durch die oben beschriebene Relativbewegung der beiden Enden des Zugentlastungselements zueinander, wird die Steigung der Wendelstruktur verändert. Der Radius der Helix vergrößert oder verkleinert sich dementsprechend.

Bei kleiner werdenden Radius wird das Kabel von der Wendel- bzw. Helixform des Zugentlastungselements eingeschnürt und fixiert. Dadurch wird eine Zugentlastung für das Kabel gewährleistet.

Durch eine Hin- und Herbewegung der Spannhülse relativ zum Kabelabgangsstutzen, wird der helix- bzw. wendelförmige Teil des Zugentlastungselements um den Kabelmantel festgespannt.

In eine Drehrichtung (der Spannrichtung) der Spannhülse werden die Rasthaken des Zugentlastungselements weitergeführt und die Helixstruktur verengt sich um den Kabelmantel. In der anderen Drehrichtung gleiten die Mitnehmerhaken an den Mitnehmerkonturen der Spannhülse ab. Die Vorrichtung fungiert wie eine so genannte Ratsche.

In einer vorteilhaften Ausführungsform weist das Zugentlastungselement eine erste und eine zweite wendelförmige Struktur auf. Die Strukturen sind zueinander gegenläufig, d.h. die eine ist rechtsgängig und die andere linksgängig ausgebildet. Bei einer derartigen Doppelhelix ist der eingeschnürte Kabelmantel stets zentriert, d.h. entlang der axialen Achse des Zugentlastungselements ausgerichtet.

Ein Ausführungsbeispiel der Erfindung ist in den Zeichnungen dargestellt und wird im Folgenden näher erläutert. Es zeigen:
- Fig. 1a: eine perspektivische Darstellung des Verriegelungsrings,
- Fig. 1b: eine perspektivische Darstellung der Spannhülse,
- Fig. 1c: eine perspektivische Darstellung des Federelements,
- Fig. 2: eine perspektivische Darstellung des Kabelabgangsstutzens,
- Fig. 3: eine geschnittene Darstellung der Vorrichtung zur Fixierung des Kabels auf dem Kabelabgangsstutzen,

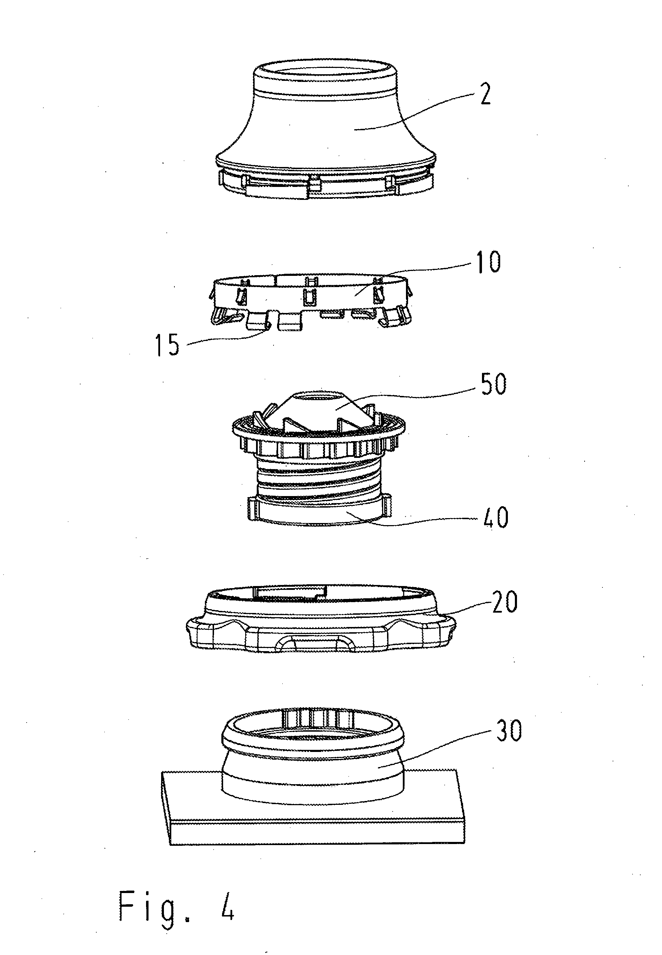

- Fig. 4: eine Explosionszeichnung der Vorrichtung zur Fixierung des Kabels an einen Kabelabgangsstutzen,
- Fig. 5: eine perspektivische Darstellung des Zugentlastungselements in Doppelhelixausführung,
- Fig. 6a: eine perspektivische Darstellung des Zugentlastungselements mit verbundenem Dichtungselement,
- Fig. 6b: eine Draufsichte auf das Dichtungselement und
- Fig. 7: die Vorrichtung zur Fixierung des Kabels an einen Kabelabgangsstutzen mit Kabelzugentlastung.

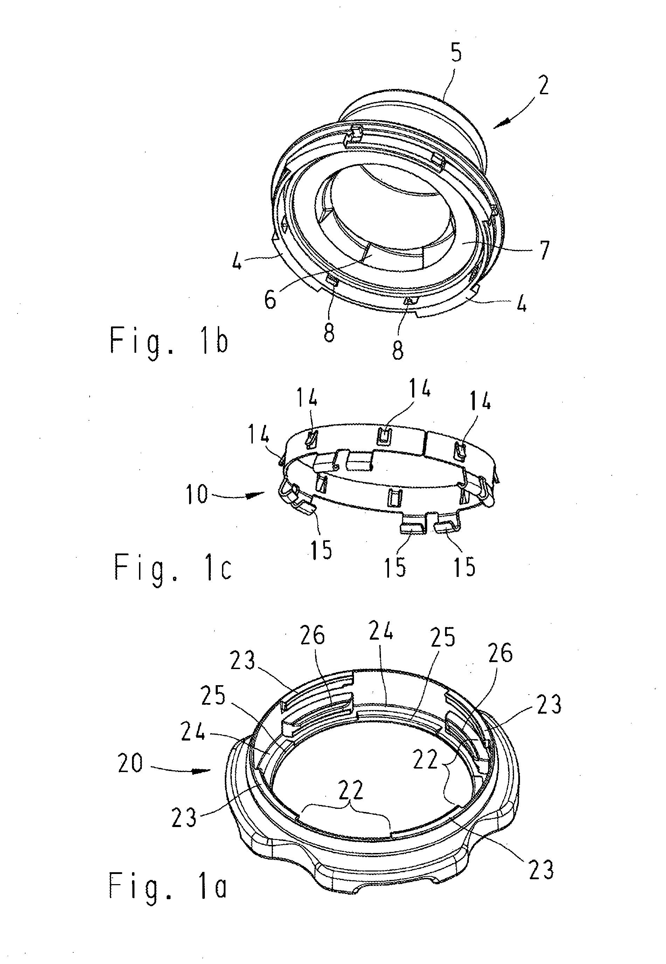

Die Figuren 1a, 1b und 1c zeigen die einzelnen Bauteile der Vorrichtung 1 zur Fixierung einer Spannhülse 2 auf einem Kabelabgangsstutzen 30. Das Kabel wird bei allen Darstellung aus Übersichtlichkeitsgründen nicht gezeigt.

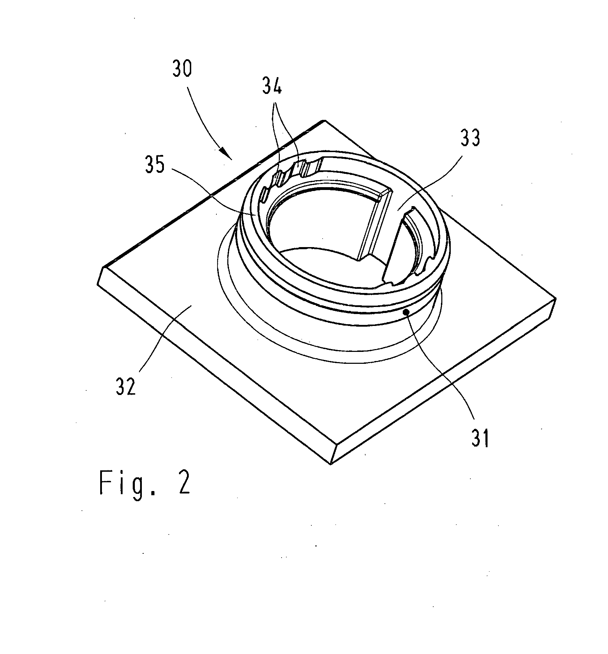

Der Kabelabgangsstutzen 30 (Fig. 2) ist im wesentlichen zylinderförmig ausgebildet und in der Regel an einem Steckverbindergehäuse (hier nicht gezeigt) angeformt. In der Mantelfläche des Kabelabgangsstutzens 30 ist eine zur Grundfläche 32 parallele, umlaufende Nut 31 eingebracht.

Die Spannhülse 2 (Fig. 1b) hat eine im wesentlichen trichterförmige Form. Die Spannhülse 2 enthält eine sich zur Kabelaustrittsrichtung hin verjüngende Kabelaustrittsöffnung 5. Verriegelungsseitig sind radial nach außen zeigende längliche Stege 4 angeformt. Verriegelungsseitig sind in den Mantel der Spannhülse 2 Rastöffnungen 8 vorgesehen, in welche Rastlaschen 14 des Federblechs 10 - zum Halten desselben - einrasten können.

Der Verriegelungsring 20 (Fig. 1 a) ist im wesentlichen zylinderförmig gestaltet. An einem Ende wird die Öffnung durch einen radial umlaufenden Bodenring 24 verengt. Oberhalb des Bodens 24 sind längliche Verriegelungskonturen 26 angeordnet.

Am gegenüberliegenden Ende des Verriegelungsrings 20 sind längliche Stege 23 angeformt, die durch Ausnehmungen 22 voneinander getrennt sind. Die Stege 4 der Spannhülse 2 werden in die Ausnehmungen 22 des Verriegelungsrings 20 eingeführt.

Das Federelement 10 (Fig. 1c) ist ringförmig ausgebildet. Entlang der Mantelfläche umfasst das Federelement 10 Aussparungen in denen die oben bereits erwähnten Rastlaschen 14 angeordnet sind. Die Rastlaschen 14 sind leicht radial nach außen gebogen.

Durch eine Relativbewegung des Verriegelungsrings 20 zur Spannhülse 2 in eine so genannte Verriegelungsrichtung gelangen die Rasthaken 15 des Federblechs 10 in den Wirkbereich der Verriegelungskonturen 26 des Verriegelungsrings 20. Durch die Verriegelungskonturen 26 werden die Rasthaken 15 radial nach innen geführt und greifen so in die umlaufende Nut 31 des Kabelabgangsstutzens 30 ein. Die Spannhülse 2 ist somit auf dem Kabelabgangsstutzen 30 fixiert. Gleichzeitig schieben sich die Stege 4 und 23 übereinander und verklemmen die Spannhülse 2 mit dem Verriegelungsring 20 nach dem Bajonettprinzip.

Bei einer gegensinnigen Drehung (Öffnungsrichtung) des Verriegelungsrings 20 gelangen die Rasthaken 15 wieder aus den Wirkbereich der Verriegelungskonturen 26. Die Rasthaken 15 biegen sich wieder radial nach außen zurück.

Bei einer Drehung in den Endanschlag (die Endposition) der Öffnungsrichtung und einem Hochziehen des Verriegelungsrings werden mit Hilfe der Entriegelungskonturen 25 die Rasthaken aus der umlaufenden Nut 31 des Kabelabgangsstutzens 30 zurückgezogen. Die Spannhülse 2 kann vom Kabelabgangsstutzen 30 entfernt werden.

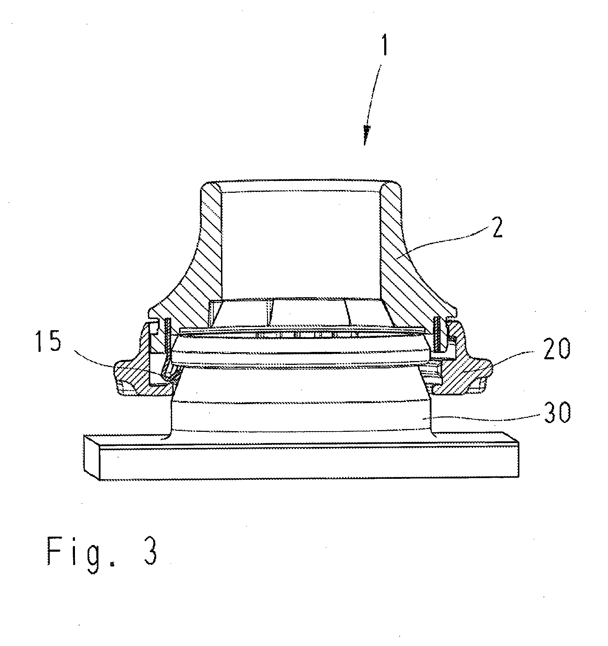

Der Verriegelungsring 20 umschließt gleichermaßen die Spannhülse 2 und den Kabelabgangsstutzen 30 (Fig. 3). Bei Drehung des Verriegelungsrings 20 in die Endposition der Verriegelungsrichtung, greifen die Rasthaken 15 vollständig in die umlaufende Nut 31 des Kabelabgangsstutzens 30 ein. Dadurch wird die Spannhülse 2 auf dem Kabelabgarigsstutzen 30 fixiert.

Die Rasthaken 15 des Federblechs 10 sind derart geformt, dass beim vollständigen Einführen der Rasthaken 15 in die umlaufende Nut 31 die Spannhülse 2 leicht nach unten - in Richtung des Kabelabgangsstutzens 30 - gezogen wird.

Im Folgenden wird näher auf die Zugentlastung des Kabels und die Abdichtung der Kabalfixierungsvorrichtung gegen Medien wie Staub und Wasser eingegangen.

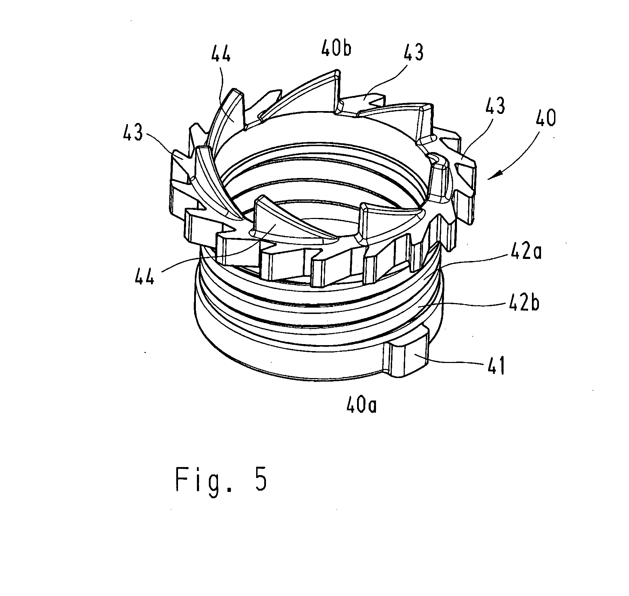

Das Zugentlastungselement 40 (Fig. 5) besteht im wesentlichen aus endseitigen Ringen, die durch eine helix- bzw. wendelförmige Struktur 42 miteinander verbunden sind. In Fig. 5 ist ein Zugentlastungselement 40 mit Doppelhelixstruktur gezeigt. Das bedeutet, es sind zwischen den Enden 40a, 40b gleichzeitig eine links- und eine rechtsgängige Struktur zu finden. Dadurch wird eine bessere Zentrierung des Kabels im Zugentlastungselement 40 erreicht.

Am ersten Ende 40a des Zugentlastungselements 40 sind radial nach außen zeigende Konturen 41 vorgesehen, die in dazu passende Ausnehmungen 33 des Kabelabgangsstutzens 30 einführbar sind. Dadurch wird das erste Ende 40a des Zugentlastungselements 40 im Kabelabgangstutzen 30 drehfest fixiert.

Am zweiten Ende 40b umfasst das Zugentlastungselement 40 radial nach außen weisende Rasthaken 43. Diese verrasten mit Rastkonturen 34 im oberen Teil des Kabelabgangsstutzens 30, so dass auch das Ende 40b drehfest fixierbar ist.

Weiterhin umfasst das Zugentlastungselement 40 am zweiten Ende 40b axial nach oben weisende Mitnehmerhaken 44, die mit Mitnehmerkonturen 6 der Spannhülse 2 zusammenwirken. Die Mitnehmerhaken 44 haben im wesentlichen die Form eines Sägezahns. Durch eine Drehung der Spannhülse (relativ zum Kabelabgangsstutzen), in Richtung der abfallenden Flanke der Mitnehmerhaken 44, wird das zweite Ende 40b des Zugentlastungselements 40 relativ zum ersten Ende 40a bewegt und die wendelförmige Struktur zwischen den Enden 40a, 40b verengt. Ein dazwischen geführtes Kabel wird eingeklemmt und so eine Zugentlastung für das Kabel realisiert.

Bei einer Drehung der Spannhülse 2 entgegen der abfallenden Flanke der Mitnehmerhaken 44, gleiten die Mitnehmerhaken 44 an den Mitnehmerkonturen 6 der Spannhülse 2 ab. Die Enden 40a, 40b werden nicht relativ zueinander bewegt.

Bei einer Hin- und Herbewegung der Spannhülse 2, kann die Helix- bzw. Wendelstruktur - wie bei einer Ratsche - um den Kabelmantel des anzuschließenden Kabels festgezurrt werden. Es wird kein weiteres Werkzeug benötigt.

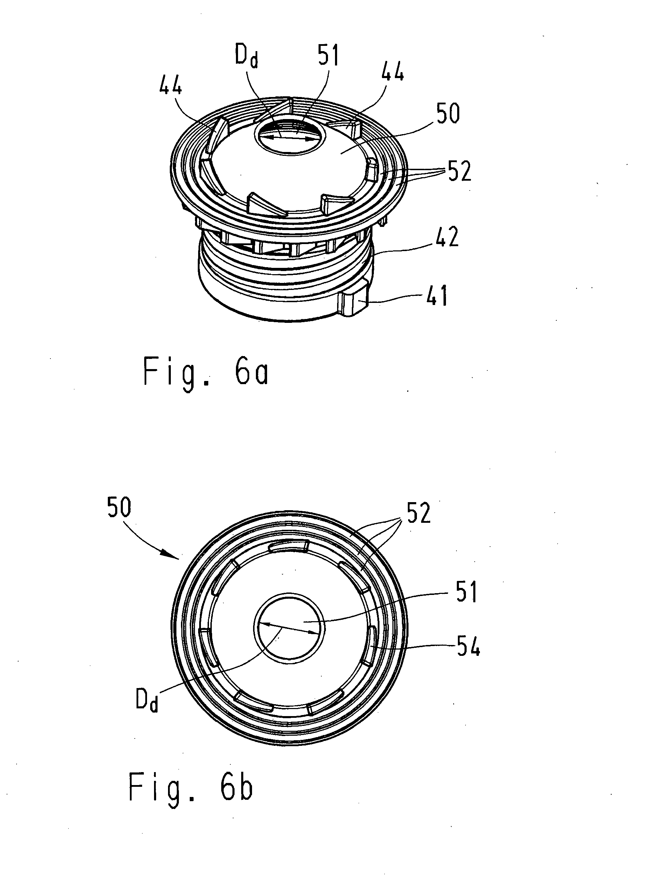

Das zweite Ende 40b des Zugentlastungselements 40 ist mit dem Dichtungselement 50 verbunden (Fig. 6a, Fig. 6b). Dabei ragen die Mitnehmerhaken 44 durch Aussparungen 54. Das anzuschließende Kabel wird durch die Öffnung 51 des Dichtungselements 50 geführt. Der Durchmesser Dd dieser Öffnung ist jeweils kleiner als der Durchmesser des anzuschließenden Kabels.

Außenseitig umfasst das Dichtungselement 50 Presslamellen 52. Diese sorgen für einen hinreichenden Anpressdruck der Dichtung auf dem Kabelabgangsstutzen 30.

Die Spannhülse 2 umschließt zum Teil die Mantelfläche des Kabelabgangsstutzens 30. Im Inneren der Spannhülse 2 ist ein umlaufender Rand 7 angeformt. Zwischen diesem Rand 7 und der Berandung 35 des Kabelabgangsstutzen 30 ist das Dichtungselement 50 im zusammengebauten Zustand der Vorrichtung 1 angeordnet.

Die inneren Dichtlamellen 53 entlang der Öffnung 51, verstärken die Materialdichte des Elastomers und erhöhen dadurch die Anpresskraft (Dichtigkeit) zum Kabelmantel.

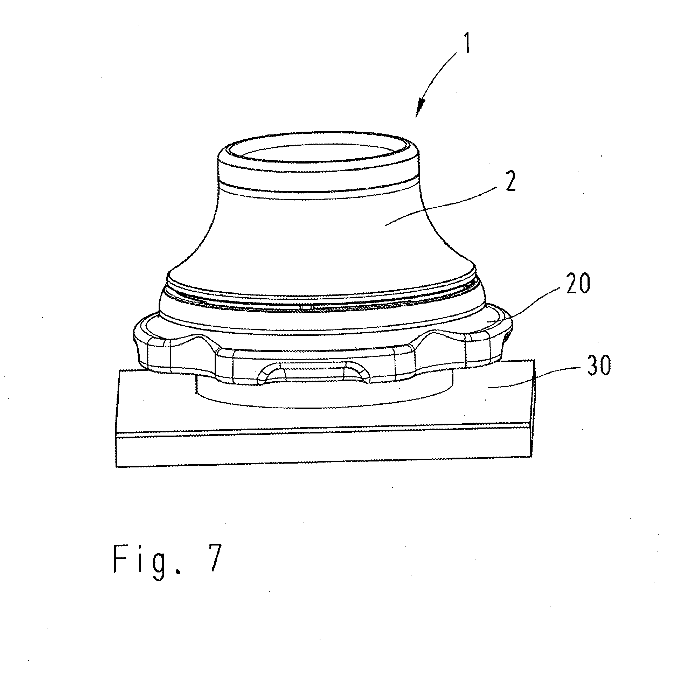

Die Figur 7 zeigt alle Bauteile der Vorrichtung zur Fixierung, Abdichtung und Zugentlastung eines anzuschließenden Kabels an einen Kabelabgangsstutzen eines Steckverbinders, Schaltschrank oder Ähnlichem in Wirkzusammenhang.

### Bezugszeichenliste

**Vorrichtung zur Fixierung eines Kabels an einen Kabelabgangsstutzen**

| | | | |
|---|---|---|---|
| **1** | **Vorrichtung zur Fixierung des Kabels** | | |
| **2** | **Spannhülse** | **40** | **Zugentlastungselement** |
| | | 41 | Kontur |
| 4 | Längliche Stege | 40a | Erstes Ende |
| 5 | Kabelöffnung | 40b | Zweites Ende |
| 6 | Mitnehmerkontur (innen) | 42 | Helix- bzw. wendelförmige Struktur |
| | | | |
| 7 | umlaufender Rand | 42a | rechtsgängige wendelf. Struktur |
| | | 42b | linksgängige wendelf. Struktur |
| | | 43 | Rasthaken |
| **10** | **Federelement** | 44 | Mitnehmerhaken |
| | | | |
| 14 | Rastlaschen | **50** | **Dichtungselement** |
| 15 | Verriegelungshaken | 51 | Öffnung |
| | | 52 | Presslamellen |
| | | 53 | Dichtlamellen |
| | | | |
| **20** | **Verriegelungsring** | | |
| 22 | Ausnehmung | | |
| 23 | länglicher Steg | | |
| 24 | Bodenring | | |
| 25 | Entriegelungskontur | | |
| 26 | Verriegelungskontur | | |
| | | | |
| **30** | **Kabelabgangsstutzen** | | |
| 31 | umlaufende Nut | | |
| 32 | Grundfläche | | |
| 33 | Ausnehmungen | | |
| 34 | Rastkonturen | | |

## Patentansprüche

1. Vorrichtung zur Fixierung eines Kabels an einen Kabelabgangsstutzen (30), bestehend aus einer Spannhülse (2), einem Federelement (10) und einem Verriegelungsring (20)
**dadurch gekennzeichnet, dass**
• das Federelement (10) zumindest einen Verriegelungshaken (15) umfasst,
• der durch eine Relativbewegung des Verriegelungsrings (20) zur Spannhülse (2) in eine umlaufende Nut (31) des Kabelabgangsstutzens (30) einführbar ist
• und dass die Verriegelungshaken (15) des Federelements (10), bei Drehung des Verriegelungsrings (20) in eine Endposition einer ersten Richtung, vollständig in die umlaufende Nut des Kabelabgangsstutzens (30) eingeschoben sind, so dass die Spannhülse (2) auf dem Kabelabgangsstutzen (30) unverlierbar gehalten ist.

2. Vorrichtung nach Anspruch 1
**dadurch gekennzeichnet, dass** der Verriegelungsrings (20) zumindest eine Verriegelungskontur (26) umfasst, die bei der Relativbewegung des Verriegelungsrings (20) zur Spannhülse (2) auf den zumindest einen Verriegelungshaken (15) des Federelements (10) derart einwirkt, dass der zumindest eine Verriegelungshaken (15) radial nach innen in die umlaufende Nut (31) des Kabelabgangsstutzens einführbar ist.

3. Vorrichtung nach einem der vorstehenden Ansprüche
**dadurch gekennzeichnet, dass** die Rasthaken (15) des Federelements (10), bei Drehung des Verriegelungsrings (20) in eine Endposition einer zweiten Richtung, die Rasthaken (15) vollständig aus der umlaufenden Nut des Kabelabgangsstutzens (30) entfernt sind, so dass die Spannhülse (2) vom Kabelabgangsstutzen (30) entfernbar ist.

4. Vorrichtung nach einem der vorstehenden Ansprüche
**dadurch gekennzeichnet, dass** die Spannhülse (2) radiale Stege (4) aufweist, die axial in Aussparungen (22) des Verriegelungsrings (20) einführbar sind, wobei die Stege (4) bei der Relativbewegung des Verriegelungsrings (20) zur Spannhülse (2) mit radialen Stegen (23) des Verriegelungsrings (20) derart zusammenwirken, dass die Spannhülse (2) und der Verriegelungsring (20) miteinander verklemmt sind.

## Claims

1. A device for fixing a cable in place on a cable outlet connector (30), consisting of a clamping sleeve (2), a spring element (10), and a locking ring (20),
**characterized in that**
• the spring element (10) comprises at least one locking hook (15)
• which can be inserted into a peripheral groove (31) of the cable outlet connector (30) by a relative movement of the locking ring (20) in relation to the clamping sleeve (2),
• and **in that** upon rotation of the locking ring (20) into an end position of a first direction, the locking hooks (15) of the spring element (10) are fully inserted into the peripheral groove of the cable outlet connector (30), so that the clamping sleeve (2) is captively held on the cable outlet connector (30).

2. The device according to claim 1,
**characterized in that** the locking ring (20) comprises at least one locking contour (26) which, upon the relative movement of the locking ring (20) in relation to the clamping sleeve (2), acts on the at least one locking hook (15) of the spring element (10) such that the at least one locking hook (15) can be inserted radially inwards into the peripheral groove (31) of the cable outlet connector (30).

3. The device according to either of the preceding claims,
**characterized in that** upon rotation of the locking ring (20) into an end position of a second direction, the latching hooks (15) of the spring element (10) are fully removed from the peripheral groove of the cable outlet connector (30), so that the clamping sleeve (2) can be removed from the cable outlet connector (30).

4. The device according to any of the preceding claims,
**characterized in that** the clamping sleeve (2) includes radial webs (4) which are adapted to be axially inserted into recesses (22) of the locking ring (20), the webs (4) cooperating with radial webs (23) of the locking ring (20) during the relative movement of the locking ring (20) in relation to the clamping sleeve (2) such that the clamping sleeve (2) and the locking ring (20) are clamped with each other.

## Revendications

1. Dispositif de fixation d'un câble sur une tubulure de sortie de câble (30), composé d'une douille de serrage (2), d'un élément ressort (10) et d'un anneau de verrouillage (20),
**caractérisé en ce que**
• l'élément ressort (10) présente au moins un crochet de verrouillage (15)
• qui est apte à être inséré dans une rainure périphérique (31) de la tubulure de sortie de câble (30) par un mouvement relatif de l'anneau de verrouillage (20) par rapport à la douille de serrage (2),
• et **en ce que** lors de la rotation de l'anneau de verrouillage (20) dans une position de fin de course dans un premier sens, les crochets de verrouillage (15) de l'élément ressort (10) sont entièrement insérés dans la rainure périphérique de la tubulure de sortie de câble (30) de telle sorte que la douille de serrage (2) est maintenue imperdable sur la tubulure de sortie de câble (30).

2. Dispositif selon la revendication 1,
**caractérisé en ce que** l'anneau de verrouillage (20) comprend au moins un contour de verrouillage (26) lequel, lors du mouvement relatif de l'anneau de verrouillage (20) par rapport à la douille de serrage (2), agit sur ledit au moins un crochet de verrouillage (15) de l'élément ressort (10) de telle sorte que ledit au moins un crochet de verrouillage (15) est apte à être inséré radialement vers l'intérieur dans la rainure périphérique (31) de la tubulure de sortie de câble.

3. Dispositif selon l'une des revendications précédentes,
**caractérisé en ce que** lors d'une rotation de l'anneau de verrouillage (20) dans une position de fin de course dans un deuxième sens, les crochets d'enclenchement (15) de l'élément ressort (10) sont entièrement extraits de la rainure périphérique de la tubulure de sortie de câble (30) de sorte que la douille de serrage (2) peut être retirée de la tubulure de sortie de câble (30).

4. Dispositif selon l'une des revendications précédentes,
**caractérisé en ce que** la douille de serrage (2) présente des barrettes radiales (4) qui sont aptes à être insérées axialement dans des évidements (22) de l'anneau de verrouillage (20), les barrettes (4) coopérant avec des barrettes radiales (23) de l'anneau de verrouillage (20) lors d'un mouvement relatif de l'anneau de verrouillage (20) par rapport à la douille de serrage (2) de telle sorte que la douille de serrage (2) et l'anneau de verrouillage (20) sont bloqués l'un sur l'autre.
